# EUROPEAN PATENT APPLICATION

(11) **EP 3 291 378 A1**
(43) Date of publication of application: **07.03.2018**
(21) Application number: 17186902.7
(22) Date of filing: 18.08.2017
(51) Int. Cl.: H01R 13/20, H01R 13/24, H01R 13/533, H02G 15/064, H02G 15/068

(54) **CABLE CONNECTION DEVICE**

(30) Priority: 30.08.2016 JP 2016167821
(71) Applicant: Hitachi Metals, Ltd., Tokyo 1088224 (JP)
(72) Inventor: SUMI, Yosuke, Minato-ku, Tokyo (JP); OTAWA, Kenichi, Minato-ku, Tokyo (JP)
(74) Representative: Gill, David Alan

(57) **Abstract**

The present invention provides for a cable connection device (1) including a female rubber unit (4) with an inner contact surface (4a) inside the female rubber unit (4), a male rubber unit (5) including an outer contact surface (5a) outside the male rubber unit (5), and an epoxy unit (6) arranged between the female rubber unit (4) and the male rubber unit (5), and with an insulator (60) that includes a female contact surface (6a) to contact the inner contact surface (4a) and a male contact surface (6b) to contact the outer contact surface (5a), and wherein a through hole (6c) is formed at a center of the epoxy unit (6) around the connector (3), and wherein a female conductor connection terminal (3B) arranged in the through hole (6c) of the epoxy unit (6) and a male conductor connection terminal (3A) arranged in the through hole (6c), are inserted into the female conductor connection terminal (3B), and a first retention mechanism prevents the female conductor connection terminal (3B) from uncoupling from the epoxy unit (6), and a second retention mechanism prevents the male conductor connection terminal (3A) from uncoupling from the female conductor connection terminal (3B).

## Description

The present invention relates to a cable connection device.

A cable connection device for connecting a pair of power cables is proposed by which a leading power cable led on a roof of a vehicle is connected with a crossover power cable connecting between vehicles (see e.g. JP-H08-310394).

The cable connection disclosed in JP-H08-310394 is constructed such that a cable linear connection body is formed by a cylindrical member made of hard plastic material and non-magnetic metal, and a taper shaped cable insertion hole is defined at both ends inside the cable linear connection body.

Known cable connection devices exhibit various limitations and problems, for example, the cable connection device being provided with the connection body disclosed in JP-H08-310394 is difficult to reduce in size or weight of the connection body.

For reducing the size or the weight of the connection body, a structure may be devised that the connection is provided with a female conductor connection terminal on which an exposed cable conductor termination of the leading power cable is mounted, and a male conductor connection terminal which is inserted into the female conductor connection terminal and on which an exposed cable conductor termination of the crossover power cable is mounted.

However, the above structure may cause a positional misalignment or disengagement (or uncoupling) between parts of the connection and a periphery thereof.

The invention seeks to provide for a cable connection device having advantages over known such devices, particularly as regards connectivity.

As an example, the invention seeks to provide a cable connection device that prevents a positional misalignment or disengagement (or uncoupling) between parts of the connection and a periphery thereof, while being provided with the male and female conductor connection terminals as the connection.

According to one aspect of the present invention, there is provided a cable connection device, comprising a plurality of insulating parts arranged around a connection of cable conductors that are exposed from terminations of a pair of power cables as a connected object,
wherein the plurality of insulating parts comprise a female part comprising an inner contact surface inside the female part, a male part comprising an outer contact surface outside the male part, and an intermediate part that is arranged between the female part and the male part and that comprises an insulator comprising an insulating material, a female contact surface to contact the inner contact surface and a male contact surface to contact the outer contact surface, the intermediate part defining a through hole formed in an axial direction at a center of the intermediate part, and
wherein the connection comprises:
a female conductor connection terminal which is arranged in the through hole and on which one of the cable conductors that is exposed is mounted;
a male conductor connection terminal which is arranged in the through hole and is inserted into the female conductor connection terminal and on which an other of the cable conductors that is exposed is mounted;
a first retention mechanism that prevents the female conductor connection terminal from uncoupling from the intermediate part; and
a second retention mechanism that prevents the male conductor connection terminal from uncoupling from the female conductor connection terminal.

The cable connection device can have a first retention mechanism that has retention strength stronger than the second retention mechanism.

Further, the first retention mechanism can comprise a first groove formed in the intermediate part, a second groove formed in the female conductor connection terminal, and a coil spring arranged between the first groove and the second groove.

Advantageously, the second retention mechanism can comprises a third groove formed in the male conductor connection terminal, a fourth groove formed in the female conductor connection terminal, and a coil spring arranged between the third groove and the fourth groove.

The male part can also be integrated with the intermediate part.

As a further example, the intermediate part can comprise a conductive tube that defines the through hole and is arranged inside the insulator.

Preferably, the female part and the male part can mainly comprise a rubber, and wherein the insulator of the intermediate part can be formed by the insulating material harder than the rubber.

Yet further, the intermediate part can be constructed such that an area of the male contact surface is smaller than an area of the female contact surface, and that a gap can be defined inside the through hole and between the intermediate part and the connection so as to have a flow path to allow air escape through an interface between the female contact surface and the inner contact surface when the female contact surface contacts the inner contact surface of the female part.

According to aspects of the invention, a cable connection device offers advantageous connectivity and in particular can be provided that prevents a positional misalignment or disengagement (or uncoupling) between parts of the connection and periphery thereof, while being provided with the male and female conductor connection terminals as the connection.

Aspects of the invention are discussed further hereinafter, by way of example only, and with reference to the drawings in which:
FIG.1 is a cross sectional view schematically showing a structural example of a cable connection device according to an embodiment in the present invention;
FIG.2 is an exploded perspective view showing a main part of the cable connection device shown in FIG.1;
FIG.3 is a cross sectional view showing a main part (region A in FIG.1) of the cable connection device shown in FIG.1; and
FIG.4 is a cross sectional view showing a main part of the cable connection device to explain an assembly process shown in FIG.1.

Next, an embodiment of the present invention will be described below with reference to the appended drawings. Meanwhile, the same reference numerals are assigned to the elements having substantially the same functions as the elements in the figures and the redundant description thereof is omitted.

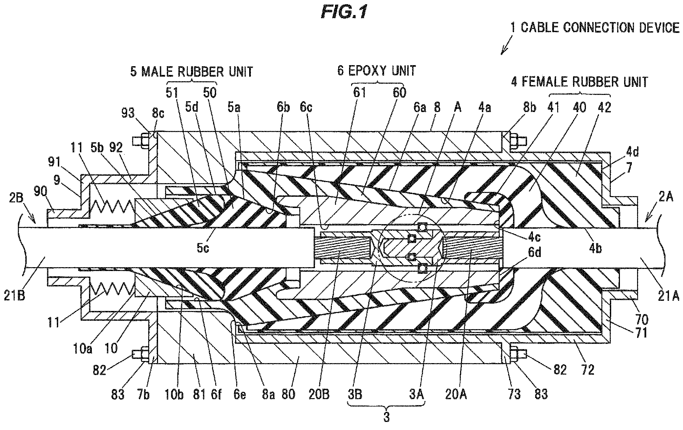

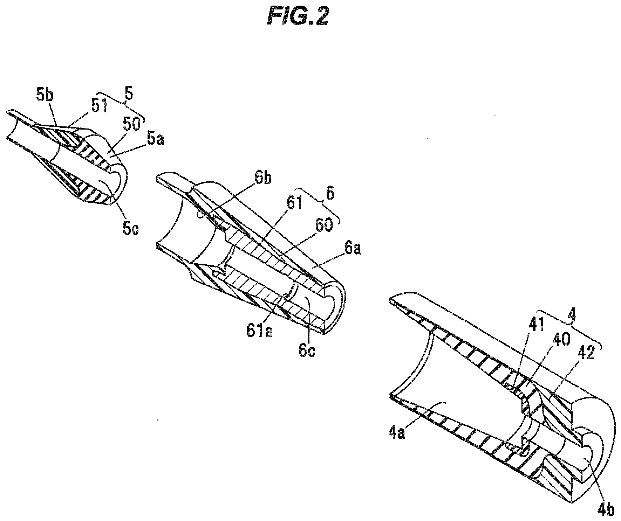

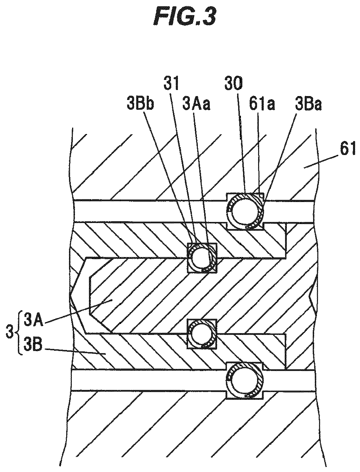

FIG.1 is a cross sectional view schematically showing a structural example of a cable connection device according to the embodiment in the present invention. FIG.2 is an exploded perspective view showing a main part of the cable connection device shown in FIG.1. FIG.3 is a cross sectional view showing a main part (region A in FIG. 1) of the cable connection device shown in FIG.1.

A cable connection device 1 comprises a connection 3 formed by one pair of conductor connection terminals 3A, 3B that are respectively connected to cable conductors 20A, 20B exposed by stepwise peeling terminations of one pair of power cables 2A, 2B that are connection objects. The cable connection device 1 comprises three insulating parts that are a female rubber unit 4, a male rubber unit 5, and an epoxy unit 6 that are arranged around the connection 3 so as to electrically insulate a circumference of the connection 3.

Such insulating parts are preferable to be assembled in predetermined assembly sequence so as to easily connect one pair of the power cables 2A, 2B and remove air from a contact surface (an interface) between both insulating parts. It is preferable to arrange an air escape flow path between the connection 3 and the epoxy unit 6 for the above purpose. In this case, the female rubber unit 4 is an example of a female part. The male rubber unit 5 is an example of a male part. The epoxy unit 6 is an example of an intermediate part.

The cable connection device 1 comprises a first body 7, an intermediate body 8, and a second body 9 that house the female rubber unit 4, the male rubber unit 5, and the epoxy unit 6 while one pair of the power cables 2A, 2B are connected by one pair of the conductor connection terminals 3A, 3B, and a spring member 11 pressing the male rubber unit 5 toward the female rubber unit 4 through a pressing member 10.

For example, the power cables 2A, 2B comprise the cable conductors 20A, 20B made of strands. And the power cables 2A, 2B are formed by an inner semi-conductor layer, insulating layers 21 A, 21B, an outer semi-conductor layer, a shielding layer, a pressing tape layer, and a sheath layer on outer peripheries of the cable conductors 20A, 20B in this order. The power cables 2A, 2B are high voltage cables. For example, the power cables 2A, 2B are extra-high voltage cables used for train.

The connection 3 comprises a female conductor connection terminal 3B on which one of the exposed cable conductors (the cable conductor 20B) is mounted, a male conductor connection terminal 3A inserted into the female conductor connection terminal 3B on which the other exposed cable conductor (the cable conductor 20A) is mounted, a first retention mechanism to prevent the female conductor connection terminal 3B from uncoupling from the intermediate part (the epoxy unit 6), and a second retention mechanism to prevent the male conductor connection terminal 3A from uncoupling from the female conductor connection terminal 3B that are arranged in a through hole 6c of the epoxy unit 6 that will be described below. For example, the male conductor connection terminal 3A and the female conductor connection terminal 3B are formed by metals such as brass and aluminum alloy. The first and second retention mechanisms prevent the positional misalignment between parts (especially, at a fitting interface) as well as uncoupling therebetween. In this embodiment, "the positional misalignment" mainly means the positional misalignment in the longitudinal direction of the cable connection device.

In this embodiment, retention strength of the first retention mechanism is preferable to be stronger than retention strength of the second retention mechanism. Hereby, retention can be compatible with increasing connection quick-releasablity (easily removing and replacing). The retention strength of the first retention mechanism is preferable to be not less than 1.1 times and not more than 1.3 times stronger than the retention strength of the second retention mechanism. The retention strength of the first retention mechanism is more preferable to be 1.2 times stronger than the retention strength of the second retention mechanism. For example, when the retention strength of the second retention mechanism is set to approximately 50 kgf, the retention strength of the first retention mechanism is set to approximately 60 kgf.

For example, the first retention mechanism comprises a first groove 61 a formed in the conductive tube 61 of the epoxy unit 6 that is the intermediate part, a second groove 3Ba formed in the female conductor connection terminal 3B, and a coil spring 30 arranged between the first groove 61a and the second groove 3Ba. The first groove 61a and the second groove 3Ba may be formed by any one of the grooves. However, it is preferable to arrange both grooves. For example, a coil spring from BAL SEAL ENGINEERING, Inc. can be used as the coil spring 30. The retention strength can be adjusted by parameters such as depths, diameters, and forming positions of the first and second grooves 61a and 3Ba, and spring strength of the coil spring 30.

For example, the second retention mechanism comprises a third groove 3Aa formed in the male conductor connection terminal 3A, a fourth groove 3Bb formed in the female conductor connection terminal 3B, and a coil spring 31 arranged between the third groove 3Aa and the fourth groove 3Bb. For example, a coil spring from BAL SEAL ENGINEERING, Inc. can be used as the coil spring 31. The retention strength can be adjusted by parameters such as depths, diameters, and forming positions of the third and fourth grooves 3Aa and 3Bb, and spring strength of the coil spring 31.

The first and second retention mechanisms are not limited to the above structures. For example, the first and second retention mechanisms may be a structure formed by a groove formed in the conductive tube 61 of the epoxy unit 6 that is the intermediate part and a protrusion formed on the female conductor connection terminal 3B, and a structure formed by a groove formed in the male conductor connection terminal 3A and a protrusion formed on the female conductor connection terminal 3B. Further, the forming parts of the groove and the protrusion may be reversed. The first retention mechanism is preferable to be configured to apply the above coil spring that fails to cut off air flow such that the air escape flow path described above arranged between the connection 3 and the epoxy unit 6 performs effectively in assembling the cable connection device.

The female rubber unit 4 is arranged at outer edge sides of parts such as the power cable 2A and the connection 3. The female rubber unit 4 is mainly formed by rubber. The female rubber unit 4 comprises a conical inner contact surface 4a inside the female rubber unit 4, and defines a through hole 4b along the axial direction at the center of the female rubber unit 4. Specifically, the female rubber unit 4 comprises an insulator 40 formed by a rubber mold and semi-conductor layers 41, 42 made of conductive rubber that are arranged at both sides in the axial direction of the insulator 40. The through hole 4b defines a diameter smaller than an outer diameter of the power cable 2A (an outer diameter of the insulating layer 21 A shown in FIG.1) so as not to cause void (pore) at an interface with the power cable 2A. The female rubber unit 4 comprises a bottom surface 4c on which an end surface 6d of the epoxy unit 6 abuts. The female rubber unit 4 comprises an end surface 4d that abuts on an inner surface of a vertical wall 71 of the first body 7.

For example, the insulator 40 is formed by rubber such as silicone rubber, ethylene propylene monomer (EPM) rubber, and ethylene propylene diene monomer (EPDM) rubber.

The semi-conductor layers 41, 42 are arranged so as to decrease electric field concentration. The semi-conductor layers 41, 42 are mainly formed by polymer type material. For example, the semi-conductor layers 41, 42 are formed by extrusion molding rubber such as ethylene propylene monomer rubber, ethylene-vinyl acetate (EVA) copolymer resin, and butyl rubber that have conductivity by dispersing conductive powders such as carbon.

The male rubber unit 5 is arranged at an outer edge side of the power cable 2B. The male rubber unit 5 is mainly formed by rubber. The male rubber unit 5 comprises a conical outer contact surface 5a at a conductor connection terminal 3B side and a conical outer contact surface 5b at an opposite side of the conductor connection terminal 3B, and defines a through hole 5c along the axial direction at the center of the male rubber unit 5. Specifically, the male rubber unit 5 comprises an insulator 50 arranged at the conductor connection terminal 3B side and a semi-conductor layer 51 made of conductive rubber that is arranged at the opposite side of the conductor connection terminal 3B. The through hole 5c defines a diameter smaller than an outer diameter of the power cable 2B (an outer diameter of the insulating layer 21B shown in FIG.1) so as not to cause the void (the pore) at an interface with the power cable 2B. Further, the male rubber unit 5 is preferable to have the outer diameter of a periphery 5d that is a maximum diameter of the male rubber unit 5 smaller than an inner diameter of an inner peripheral surface 6f of the epoxy unit 6 that will be described below.

For example, the insulator 50 is formed by rubber such as the silicone rubber, the ethylene propylene monomer (EPM) rubber, and the ethylene propylene diene monomer (EPDM) rubber.

The semi-conductor layer 51 is arranged so as to decrease the electric field concentration. The semi-conductor layer 51 is mainly formed by the polymer type material. For example, the semi-conductor layer 51 is formed by extrusion molding rubber such as the ethylene propylene monomer rubber, the ethylene-vinyl acetate (EVA) copolymer resin, and the butyl rubber that have conductivity by dispersing the conductive powders such as carbon.

The epoxy unit 6 is arranged at outer edge sides of one pair of the conductor connection terminals 3A, 3B, and between the female rubber unit 4 and the male rubber unit 5. The epoxy unit 6 comprises a female contact surface 6a contacting the inner contact surface 4a of the female rubber unit 4 and a male contact surface 6b contacting the outer contact surface 5a of the male rubber unit 5. The epoxy unit 6 comprises an insulator 60 formed by insulating materials harder than the rubber forming the female rubber unit 4 and the male rubber unit 5 such as epoxy resin, and a conductive tube 61 that defines the through hole 6c along the axial direction at the center of the epoxy unit 6 and that is arranged inside the insulator 60. Further, the epoxy unit 6 comprises the end surface 6d abutting on the bottom surface 4c of the female rubber unit 4, and an end surface 6e abutting on an end surface 8a of a thick cylinder 81 of the intermediate body 8 that will be described below. For example, the conductive tube 61 is made of metals such as brass and aluminum alloy.

An contact area between the outer contact surface 5a of the male rubber unit 5 and the male contact surface 6b of the epoxy unit 6 is set smaller than an contact area between the inner contact surface 4a of the female rubber unit 4 and the female contact surface 6a of the epoxy unit 6. And an inclined angle of the male contact surface 6b with respect to the central axis is set larger than an inclined angle of the female contact surface 6a with respect to the central axis.

A gap formed between the through hole 6c of the conductive tube 61, and the connection 3 and the power cable 2B defines a flow path to allow air escape through an interface between the female contact surface 6a of the epoxy unit 6 and the inner contact surface 4a of the female rubber unit 4 when the female contact surface 6a of the epoxy unit 6 contacts the inner contact surface 4a of the female rubber unit 4 while the outer contact surface 5a of the male rubber unit 5 fails to contact the male contact surface 6b of the epoxy unit 6.

The male rubber unit 5 may be integrated with the epoxy unit 6 after the process to contact the female contact surface 6a of the epoxy unit 6 with the inner contact surface 4a of the female rubber unit 4. The male rubber unit 5 may be integrated with the epoxy unit 6 originally if the above air escape flow path (the gap) is not arranged. A method of integrating includes adhesion and fusing.

The first body 7 comprises a small diameter tube 70, the vertical wall 71 formed outward from one end of the small diameter tube 70, a large diameter tube 72 connected to an outside end of the vertical wall 71, and a flange 73 formed at an outside of the large diameter tube 72. A plurality of mounting holes is formed on the flange 73 at regular intervals.

The intermediate body 8 comprises a thin cylinder 80 and the thick cylinder 81. A plurality of bolts 82 is provided in a protruding condition on an end surface 8b of the thin cylinder 80 at positions with respect to a plurality of mounting holes formed on the flange 73. A plurality of bolts 82 is provided in a protruding condition on an end surface 8c of the thick cylinder 81 at positions with respect to a plurality of mounting holes formed on a flange 93 of the second body 9.

The second body 9 comprises a small diameter tube 90, a vertical wall 91 formed outward from one end of the small diameter tube 90, a large diameter tube 92 connected to an outside end of the vertical wall 91, and a flange 93 formed outward from one end of the large diameter tube 92. A plurality of mounting holes is formed on the flange 93 at regular intervals.

The intermediate body 8 and the first body 7 are assembled by fixing the bolt 82 and a nut 83 after inserting the large diameter tube 72 of the first body 7 into the inside of the thin cylinder 80 so as to insert the bolt 82 provided in the protruded condition from the thin cylinder 80 of the intermediate body 8 into the mounting hole of the flange 73 of the first body 7. The intermediate body 8 and the second body 9 are assembled by inserting the bolt 82 provided in the protruded condition from the thick cylinder 81 of the intermediate body 8 into the mounting hole of the flange 93 of the second body 9 and fixing the bolt 82 and the nut 83.

For example, the first body 7, the intermediate body 8, and the second body 9 are formed by metals such as aluminum. Meanwhile, structures of the first body 7, the intermediate body 8, and the second body 9 are not limited to the structures shown in FIG.1.

The pressing member 10 has a cylindrical shape. The pressing member 10 comprises a contact surface 10a perpendicular to the axial direction on which the spring member 11 contacts and a cone contact surface 10b contacting the outer contact surface 5b of the male rubber unit 5. For example, the pressing member 10 is formed by metals such as aluminum.

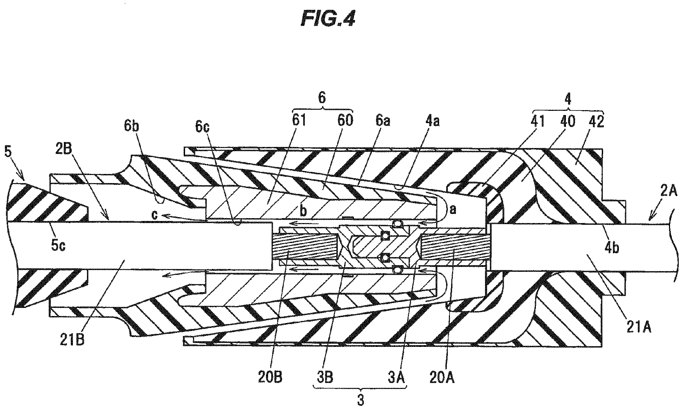

Next, an assembly process of the cable connection device 1 will be described below with reference to FIGS.1 to 4. FIG.4 is a cross sectional view showing a main part of the cable connection device to explain an assembly process shown in FIG.1. Meanwhile, the first body 7, the intermediate body 8, the second body 9, the pressing member 10, and the spring member 11 are not shown in FIG.4.

### (1) Preparatory work

The cable conductors 20A, 20B and the insulating layers 21 A, 21B are exposed by respectively stepwise peeling the terminations of one pair of the power cables 2A, 2B that are the connection objects. Then, the conductor connection terminals 3A, 3B are connected to the cable conductors 20A, 20B. The coil spring 31 is mounted on the groove 3Aa of the conductor connection terminal 3A and the coil spring 30 is mounted on the groove 3Ba of the conductor connection terminal 3B. The power cable 2A is inserted into the through hole 4b of the female rubber unit 4. The power cable 2B is inserted into the through hole 5c of the male rubber unit 5 and the though hole 6c of the epoxy unit 6. Then, the conductor connection terminals 3A, 3B are connected to each other. In this case, the coil spring 31 is fitted in the groove 3Bb of the conductor connection terminal 3B.

### (2) Assembling the female rubber unit 4 and the epoxy unit 6

As described above, the first body 7 and the intermediate body 8 are assembled by fixing the bolt 82 and the nut 83, and the epoxy unit 6 is arranged inside the female rubber unit 4. In this case, as shown in FIG.4, air in a gap between the inner contact surface 4a of the female rubber unit 4 and the female contact surface 6a of the epoxy unit 6 flows to a through hole 6c side indicated by the arrow a in FIG.4. Then, the air flows in the through hole 6c indicated by the arrow b in FIG.4. Then, the air escapes to the atmosphere indicated by the arrow c in FIG.4. Meanwhile, the coil spring 30 is fit in the groove 61a of the conductive tube 61 that forms the epoxy unit 6. The end surface 8a of the thick cylinder 81 of the intermediate body 8 presses the end surface 6e of the epoxy unit 6. The inner contact surface 4a contacts the female contact surface 6a tightly by this pressing force. The end surface 4d of the female rubber unit 4 is pressed on the inner surface of the vertical wall 71 of the first body 7. A rubber elastic force that the female rubber unit 4 and the epoxy unit 6 mainly have is applied to the gap between the inner contact surface 4a and the female contact surface 6a.

### (3) Assembling the male rubber unit 5

The pressing member 10 and the spring member 11 are arranged at an outer contact surface 5b side of the male rubber unit 5. Then, as described above, the intermediate body 8 and the second body 9 are assembled by fixing the bolt 82 and the nut 83. Pressing force caused by spring force of the spring member 11 is applied in a gap between the outer contact surface 5a of the male rubber unit 5 and the male contact surface 6b of the epoxy unit 6. The void may not remain at an interface between the outer contact surface 5a and the male contact surface 6b since the contact area between the outer contact surface 5a and the male contact surface 6b is smaller than the contact area between the inner contact surface 4a and the female contact surface 6a, and the inclined angle of the male contact surface 6b with respect to the central axis is larger than the inclined angle of the female contact surface 6a with respect to the central axis.

According to the present embodiment, functions and effects described below will be provided.

The positional misalignment or uncoupling between parts of the connection 3 and the epoxy unit 6 can be prevented since the cable connection device 1 being provided with the male and female conductor connection terminals 3A, 3B as the connection 3 is further provided with the first retention mechanism (the groove 61a, the groove 3Ba, and the coil spring 30) that prevents the female conductor connection terminal 3B from uncoupling from the epoxy unit 6, and the second retention mechanism (the groove 3Aa, the groove 3Bb, and the coil spring 31) that prevents the male conductor connection terminal 3A from uncoupling from the female conductor connection terminal 3B.

The void remaining in the interface between the female contact surface 6a and the inner contact surface 4a can be controlled since the gap formed between the through hole 6c, and the connection 3 and the power cable 2B performs as the air escape flow path from the interface between the female contact surface 6a and the inner contact surface 4a when the female contact surface 6a of the epoxy unit 6 contacts the inner contact surface 4a of the female rubber unit 4.

The void remaining in the interface between the male contact surface 6b and the outer contact surface 5a can be controlled since the epoxy unit 6 has the area of the male contact surface 6b smaller than the area of the female contact surface 6a, and the inclined angle of the male contact surface 6b with respect to the central axis larger than the inclined angle of the female contact surface 6a with respect to the central axis.

Insulation reliability can be ensured since the spring member 11 can absorb manufacturing error and aging degradation by applying the spring force of the spring member 11 in the interface between the male contact surface 6b and the outer contact surface 5a.

This cable connection device 1 can be preferably used for a cable connection device that connects leading power cable led on a roof of car and crossover power cable connecting between cars since this cable connection device 1 can downsize in the axial direction.

The embodiment in the invention is not intended to be limited to the embodiments described above. The various kinds of embodiment can be implemented. Furthermore, several omissions or modifications in components can be implemented without departing from the gist of the invention.

## Claims

1. A cable connection device, comprising a plurality of insulating parts arranged to extend around a connection of cable conductors that are exposed from terminations of a pair of power cables as a connected object,
wherein the plurality of insulating parts comprise a female part comprising an inner contact surface inside the female part, a male part comprising an outer contact surface outside the male part, and an intermediate part that is arranged to be located between the female part and the male part and that comprises an insulator comprising an insulating material, a female contact surface to contact the inner contact surface and a male contact surface to contact the outer contact surface, the intermediate part defining a through hole formed in an axial direction at a center of the intermediate part, and
wherein the connection is arranged to comprise:
a female conductor connection terminal which is arranged in the through hole and on which one of the cable conductors that is exposed is mounted;
a male conductor connection terminal which is arranged in the through hole and is inserted into the female conductor connection terminal and on which an other of the cable conductors that is exposed is mounted;
a first retention mechanism that prevents the female conductor connection terminal from uncoupling from the intermediate part; and
a second retention mechanism that prevents the male conductor connection terminal from uncoupling from the female conductor connection terminal.

2. The cable connection device according to Claim 1, wherein the first retention mechanism is arranged to have retention strength greater than the second retention mechanism.

3. The cable connection device according to Claim 1 or 2, wherein the first retention mechanism comprises a first groove formed in the intermediate part, a second groove formed in the female conductor connection terminal, and a coil spring arranged between the first groove and the second groove.

4. The cable connection device according to any one of Claims 1 to 3, wherein the second retention mechanism comprises a third groove formed in the male conductor connection terminal, a fourth groove formed in the female conductor connection terminal, and a coil spring arranged between the third groove and the fourth groove.

5. The cable connection device according to any one of Claims 1 to 4, wherein the male part is integrated with the intermediate part.

6. The cable connection device according to any one of Claims 1 to 5, wherein the intermediate part comprises a conductive tube that defines the through hole and is arranged inside the insulator.

7. The cable connection device according to any one of Claims 1 to 6, wherein the female part and the male part mainly comprise a rubber, and wherein the insulator of the intermediate part is formed by the insulating material harder than the rubber.

8. The cable connection device according to any one of Claims 1 to 7, wherein the intermediate part is constructed such that an area of the male contact surface is smaller than an area of the female contact surface, and that a gap is defined inside the through hole and between the intermediate part and the connection so as to have a flow path to allow air escape through an interface between the female contact surface and the inner contact surface when the female contact surface contacts the inner contact surface of the female part.
